# EUROPEAN PATENT APPLICATION

(11) **EP 3 530 458 A1**
(43) Date of publication of application: **28.08.2019**
(21) Application number: 17861465.7
(22) Date of filing: 17.10.2017
(51) Int. Cl.: B32B 27/18, B32B 7/02, B42D 15/00, B42D 25/36

(54) **THERMOPLASTIC RESIN FILM LAMINATE AND RESIN SHEET FOR CARD**

(30) Priority: 18.10.2016 JP 2016204711
(71) Applicant: Mitsubishi Gas Chemical Company, Inc., Tokyo 100-8324 (JP); MGC Filsheet Co., Ltd., Saitama 359-1164 (JP)
(72) Inventor: TAKEDA, Masahide, Tokyo 125-8601 (JP); SUZUKI, Kentaro, Tokyo 125-8601 (JP); ZOUTA, Keiichi, Tokyo 125-8601 (JP); ASANO, Junya, Shirakawa-shi Fukushima 961-0005 (JP)
(74) Representative: Hoffmann Eitle
(86) International application number: PCT/JP2017/037581
(87) International publication number: WO 2018/074481

(57) **Abstract**

The present invention addresses the problem of providing a laminate that, in addition to having excellent security properties as a result of adding an information-presenting substance in a stable state, is provided with a resinous transparent layer that can cover a non-transparent layer to reliably protect it. The abovementioned problem is solved by a thermoplastic resin film laminate that comprises at least one transparent layer containing a thermoplastic resin and a non-transparent layer laminated with the transparent layer, in which the transparent layer contains an information-presenting substance that emits fluorescence when irradiated with irradiation light in a specific wavelength range, and in which the transparent layer is layered so as to cover at least part of the surface of the non-transparent layer.

## Description

### TECHNICAL FIELD

The present invention relates to a thermoplastic resin film laminate containing an information-presenting substance which presents the information regarding a product name of a component, name of manufacturer, etc., and a resin sheet for a card.

### BACKGROUND ART

A method, wherein an information-presenting substance to which the information regarding a product name, name of manufacturer, lot symbol, etc. is imparted is added to a thermoplastic plastic, and wherein the information which is associated with the type of the information-presenting substance or the like in advance is read by detecting fluorescence emitted by the information-presenting substance, has been proposed (Patent Document 1).

Further, a film having the security function, wherein fluorescent organosilica particles are added to a thermoplastic resin as a material, and wherein forgery prevention and authenticity determination are carried out by utilizing fluorescence emitted by the fluorescent organosilica particles when irradiated with a visible light, is known (Patent Document 2).

### PRIOR ART DOCUMENTS

### PATENT DOCUMENTS

Patent Document 1: Japanese Laid-Open Patent Publication No. 2004-139652
Patent Document 2: Japanese Patent No. 5502229

### DISCLOSURE OF THE INVENTION

### PROBLEMS TO BE SOLVED BY THE INVENTION

To provide, to a resin film laminate, a transparent layer having excellent properties by dispersing an information-presenting substance, which enables authenticity determination, etc. to improve security property, therein in a stable state has not been realized. For this reason, it has been desired to develop a laminate having a resinous transparent layer, which has excellent security property because an information-presenting substance in a stable state is added thereto, and which can cover, for example, a non-transparent layer to which printing is applied to reliably protect it.

### MEANS FOR SOLVING THE PROBLEMS

The present inventors diligently made researches in order to solve the above-described problems and found that a laminate having excellent security property and excellent function to protect a non-transparent layer can be realized by using a transparent layer in which a predetermined information-presenting substance is homogeneously dispersed to cover at least part of the surface of the non-transparent layer with the transparent layer, and thus the present invention was achieved.

Specifically, the present invention relates to a thermoplastic resin film laminate and a resin sheet for a card described below.
(1) A thermoplastic resin film laminate, which comprises at least one transparent layer containing a thermoplastic resin and a non-transparent layer laminated with the transparent layer, wherein the transparent layer contains an information-presenting substance that emits fluorescence when irradiated with irradiation light in a specific wavelength range, and wherein the transparent layer is layered so as to cover at least part of the surface of the non-transparent layer.
(2) The thermoplastic resin film laminate according to item (1), wherein the thermoplastic resin contains a polycarbonate.
(3) The thermoplastic resin film laminate according to item (2), wherein the thermoplastic resin further contains a polyester.
(4) The thermoplastic resin film laminate according to any one of items (1) to (3), wherein printing is applied to at least one surface of the non-transparent layer, and wherein the transparent layer is layered on the surface of the non-transparent layer to which printing is applied.
(5) The thermoplastic resin film laminate according to any one of items (1) to (4), wherein the information-presenting substance contains an inorganic compound containing a lanthanoid element.
(6) The thermoplastic resin film laminate according to any one of items (1) to (5), wherein the transparent layer contains a laser color former in an amount of 0.001 to 0.5% by mass based on the mass of the whole transparent layer.
(7) The thermoplastic resin film laminate according to any one of items (1) to (6), wherein the transparent layer forms an outermost layer.
(8) The thermoplastic resin film laminate according to any one of items (1) to (7), wherein the non-transparent layer is colorless.
(9) A thermoplastic resin film laminate, which comprises at least one transparent layer containing a thermoplastic resin and a non-transparent layer laminated with the transparent layer, wherein the transparent layer contains a laser color former and contains an information-presenting substance that emits fluorescence when irradiated with irradiation light in a specific wavelength range, and wherein the transparent layer is layered so as to cover at least part of the surface of the non-transparent layer.
(10) A resin sheet for a card which comprises the thermoplastic resin film laminate according to any one of items (1) to (9).

### ADVANTAGEOUS EFFECT OF THE INVENTION

The thermoplastic resin film laminate of the present invention has high security function and can reliably protect its inner non-transparent layer, and therefore is suitably used as a resin sheet for a card. In particular, the thermoplastic resin film laminate of the present invention is suitable for the production of an ID card, an e-passport, a contactless IC card, etc. which require security property.

### BRIEF DESCRIPTION OF THE DRAWINGS

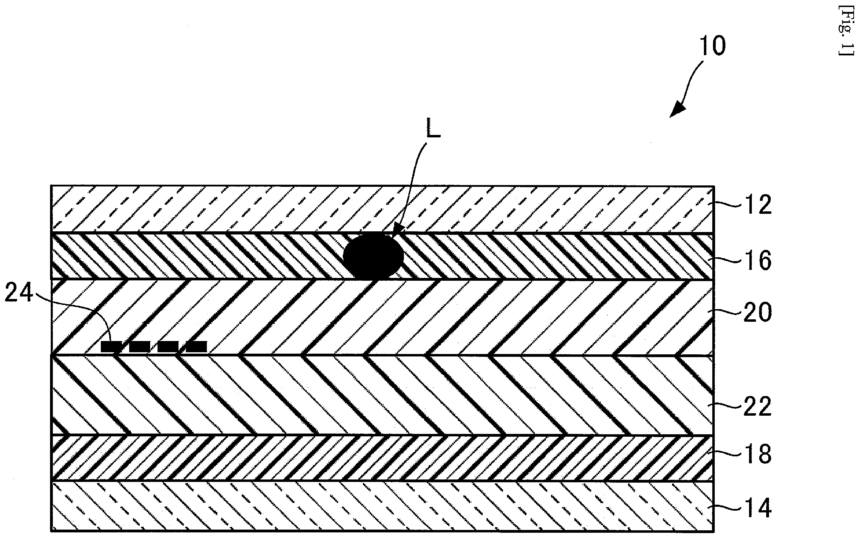

FIG. 1 is a cross sectional view showing a specific example of a resin sheet for a card (ID card).

### BEST MODE FOR CARRYING OUT THE INVENTION

Hereinafter, the present invention will be described in detail. Note that the present invention is not limited to the below-described embodiments, and can be arbitrarily changed and then carried out within a range in which the effects of the present invention are exerted.

### [Thermoplastic resin film laminate]

The thermoplastic resin film laminate of the present invention has at least one transparent layer and a non-transparent layer laminated with the transparent layer. In the thermoplastic resin film laminate, the transparent layer is layered on the non-transparent layer so as to cover at least part of the surface of the non-transparent layer. For example, printing is applied to the surface of the non-transparent layer, and the transparent layer is layered so as to cover the surface of the non-transparent layer to which printing is applied, i.e., a print surface.

Further, in the laminate, the transparent layer is preferably positioned at the outermost position to form an outermost layer. However, the position of the transparent layer is not limited to the outermost surface of the laminate. For example, both the outermost layer and a layer which is positioned at the inner side of the outermost layer and contacts with the non-transparent layer may be formed with the transparent layer, or the transparent layer may be positioned only in the inside of the laminate.

### [Transparent layer]

The transparent layer contains a thermoplastic resin as the main component. Specifically, for example, 90% by mass or more, and preferably 95% by mass or more of the transparent layer is made of the thermoplastic resin, and more preferably, the transparent layer is made of only the thermoplastic resin except for an information-presenting substance described in detail later.

As the thermoplastic resin which can substantially constitute the transparent layer as described above, a resin selected from a polycarbonate, a polyester, etc., or a mixture of a plurality of resins is used. Preferably, as the thermoplastic resin of the transparent layer, a polycarbonate is used.

Note that the "transparent layer (transparent film)" as used herein refers to a layer (film), wherein the transmittance obtained by measuring the total light transmittance of visible light in accordance with ISO-13468-1 is 50% or more. Further, when it is described that the layer and film are "transparent", it means that the transmittance obtained by measuring the total light transmittance of visible light in accordance with ISO-13468-1 is 50% or more. It is preferred that the transparent layer (transparent film) does not contain any coloring agent and is colorless.

The polycarbonate resin contained in the transparent layer is not particularly limited as long as it contains a carbonate bond in the main chain of the molecule, i.e., it contains a -[O-R-OCO]- unit (R includes an aliphatic group, an aromatic group, or both of the aliphatic group and the aromatic group, and further has a linear structure or a branched structure), but the below-described polycarbonate is particularly preferably used.

That is a polycarbonate having a bisphenol A skeleton or the like.

The weight-average molecular weight of the polycarbonate resin is preferably 20,000 to 60,000, more preferably 23,000 to 55,000, and even more preferably 35,000 to 50,000.

Further, the glass transition temperature of the polycarbonate resin is preferably 120 to 160 (°C), and more preferably 130 to 155 (°C).

The polyester resin contained in the transparent layer is, for example, PETG, PCTG, PCT or an aliphatic polyester. The aliphatic polyester may comprise, as the constituent monomer, a plurality of types of the above-described compounds, or may comprise only one type of the compound.

The PETG resin is a resin made of a polyester containing a dicarboxylic acid unit mainly composed of a terephthalic acid unit, an ethylene glycol unit and a glycol unit mainly composed of a cyclohexanedimethanol unit (1,4-cyclohexanedimethanol unit). For example, the terephthalic acid unit accounts for 50% or more of all the dicarboxylic acid units on a molar basis, and ethylene glycol accounts for 50% or more of all the glycol units (the total of the ethylene glycol unit and the cyclohexanedimethanol unit) on a molar basis.

The PCTG resin is also a polyester containing a dicarboxylic acid unit mainly composed of a terephthalic acid unit, an ethylene glycol unit and a glycol unit mainly composed of a cyclohexanedimethanol unit (1,4-cyclohexanedimethanol unit), but differs from the PETG resin on the point that the cyclohexanedimethanol unit accounts for 50% or more of all the glycol units (the total of the ethylene glycol unit and the cyclohexanedimethanol unit) on a molar basis.

The PCT resin is a polyester containing a dicarboxylic acid unit mainly composed of a terephthalic acid unit and a glycol unit mainly composed of a cyclohexanedimethanol unit (1,4-cyclohexanedimethanol unit), and does not contain any ethylene glycol unit.

The films (transparent layers) formed by using the above-described polyethylene terephthalate-based resins, i.e., the PETG resin, the PCTG resin and the PCT resin are excellent in adhesiveness to (compatibility with) the polycarbonate resin and suitably used for a laminate using the polycarbonate resin.

### [Information-presenting substance]

The information-presenting substance includes one or at least two elements, a compound of at least two elements, or a substance comprising these elements or the compound, which emits predetermined fluorescence when irradiated with an electromagnetic wave in a specific wavelength range (e.g., ultraviolet light in a predetermined wavelength range). This fluorescence is emitted when ions of the information-presenting substance are excited from a ground level to higher energy level by means of irradiation with an electromagnetic wave from outside, followed by transition to a lower energy level. The information-presenting substance emits fluorescence with a spectral distribution specific to the type thereof.

The information-presenting substance preferably comprises an element or compound (oxide, sulfide, organic complex or the like) which is not generally contained in thermoplastic resins. As the element which is not generally contained in thermoplastic resins, for example, elements of atomic numbers 31 to 88, preferably a lanthanoid element, and more preferably cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm) and ytterbium(Yb) can be mentioned.

These elements are easily measured by means of spectral analysis, are economical and sanitary, and can be easily obtained in the form of an oxide or the like. For this reason, as the information-presenting substance, one of these elements or a combination of two or more of them is suitable. Specifically, when compared to a compound relatively often contained in conventional thermoplastic resins, for example, a compound containing silicon (atomic number 14), a compound containing the above-described lanthanoid element or the like (atomic number greater than that of silicon) is more suitable as the information-presenting substance.

Further, the information-presenting substance containing the lanthanoid element is excellent in thermal stability and weather resistance. Meanwhile, the information-presenting substance containing an organic structure such as fluorescent organosilica tends to be poor in these characteristics. In particular, the information-presenting substance containing an organic structure such as fluorescent organosilica in a layer containing a thermoplastic resin may be thermally deteriorated when heated at the time of the addition to the thermoplastic resin or at the time of molding the thermoplastic resin to which it is added. Further, when a sheet containing the information-presenting substance such as fluorescent organosilica is used outdoors, it may be deteriorated by ultraviolet light.

Meanwhile, the information-presenting substance containing the lanthanoid element which does not have these defects is excellent on the point that a resin composition and transparent layer excellent in thermal stability, weather resistance, etc. can be produced.

Note that when information-presenting substances contain the same element but differ from each other in terms of the type of another element to be combined and the ratio of the combination, these information-presenting substances can be handled independently.

Further, when utilizing fluorescence in the range of from infrared light to ultraviolet light as the information-presenting substance, a single crystal to which a transition element having an incomplete 3d shell and/or a transition element having an incomplete 4f shell is added, a glass to which a transition element having an incomplete 3d shell and/or a transition element having an incomplete 4f shell is added, a complex mainly composed of a transition element having an incomplete 3d shell and/or a transition element having an incomplete 4f shell, etc. are suitable because high fluorescence intensity can be obtained thereby.

Further, the information-presenting substance may be a material obtained by adding a transition element to a predetermined base substance like yttrium oxide (Y₂O₃) containing europium (Eu³⁺). Examples of the base substance include an oxide, a sulfide, a nitride, a hydroxide, a halide, a mixed crystal, an amorphous substance and a glass. For example, a material in which a transition element is contained in the form of a chemical bond like a chelate compound, a material in which another atom or ion constituting a crystal lattice is substituted with a transition element, a material in which a transition element is interposed and contained in a crystal lattice, a material in which a transition element is contained in a space in a glass, etc. are mentioned.

In particular, when the information-presenting substance is prepared using an inorganic oxide as a base material, very high stability can be obtained. For example, it is not broken even at 1000°C and reliably remained in a target product. Accordingly, even when the target product is incinerated, and illegally dumped after incineration, the fluorescence of the information-presenting substance can be detected. Further, even when the target product is made of a solution of an aqueous solvent or organic solvent or a liquid such as a muddy color solution, the information-presenting substance is not chemically changed and the fluorescence of the information-presenting substance can be detected.

The information-presenting substance is in the form of a fine particle having an average particle diameter of, for example, 1 nm to 50 µm, preferably 10 nm to 10 µm, and more preferably 50 nm to 10 µm, and the particle may form a multimer such as a dimer and a trimer. By employing such a small particle diameter of the information-presenting substance, it can be homogeneously dispersed in the transparent layer (thermoplastic resin), and the transparency of the transparent layer can be improved. In addition, the fluorescence of the information-presenting substance is easily changed depending on the preparation history. Therefore, it is possible to substantially increase the type of the information-presenting substance to enhance confidentiality of the authentic information-presenting substance. For producing such a fine particle, it is possible to utilize various methods including the chemical reaction method, the sol-gel method, the colloidal method, the gas solidification method, the gaseous reaction method, the gas evaporation method, the sputtering method, the glass crystallization method, the precipitation method and the spraying method.

The information-presenting substance may be a product whose surface is modified with a surface modifier such as heavy hydrogen and an organic matter, or a product covered with a substance other than the base material. In this case, the distinctiveness of the information-presenting substance can be improved, the particle diameter and the structure can be fixed, and the luminous efficiency can be improved. In addition, the information-presenting substance is easily dissolved in a specific solvent and can be fit to a surrounding substance more.

### <Addition of information-presenting substance>

The addition of the information-presenting substance to the thermoplastic resin is carried out in each production process described above involved with melting, and the information-presenting substance is dispersed in the thermoplastic resin.

Specifically, a method of carrying out dry blending using a drum tumbler or the like, followed by direct molding, a method of carrying out a compounding process using an extruder, a method of carrying out a compounding process or molding using an internal mixer or heating roll, etc. are mentioned. Further, the information-presenting substance may be added after formed into a master batch.

Note that in order to ensure homogenous distribution and dispersion of the information-presenting substance in the target thermoplastic resin, a fatty acid amide, fatty acid metal salt or fatty acid ester may be used as a lubricant.

The amount of the information-presenting substance to be added to the thermoplastic resin is preferably a slight amount which gives no influence to the outer appearance and physical properties according to the intended use of the thermoplastic resin. Specifically, though the amount varies depending on the type of the thermoplastic resin, etc., it is preferably from 0.1 mass ppm or more to 1000 mass ppm or less, and more preferably from 1 mass ppm or more to 500 mass ppm or less, relative to the thermoplastic resin. When the amount is 0.1 mass ppm or more, the fluorescence emitted by the information-presenting substance can be reliably detected, and when the amount is 1000 mass ppm or less, it gives no influence to the outer appearance and physical properties of many thermoplastic resins. Moreover, when the amount is 0.2 mass ppm or more, preferably 0.3 mass ppm or more, and more preferably 0.5 mass ppm or more, the reliability of the measurement with respect to the detection of the fluorescence emitted by the information-presenting substance can be sufficiently ensured. Further, when the amount is 200 mass ppm or less, it gives no influence to the outer appearance and physical properties of almost all thermoplastic resins, and economic burden for adding the information-presenting substance to the thermoplastic resin can be reduced.

### <Association between information regarding production process and information-presenting substance>

The association between the information-presenting substance and the information regarding the production process can be made by a technique of specifying the information regarding the production process from the information regarding the information-presenting substance which can be read from the produced thermoplastic resin, and the technique is not particularly limited as long as the information regarding the production process can be specified thereby.. Examples of the information regarding the information-presenting substance which can be read from the thermoplastic resin include the type of the information-presenting substance, the adding amount of each information-presenting substance, a combination of a plurality of information-presenting substances, and the relative proportion (blending ratio) between a plurality of information-presenting substances. The type and adding amount of the information-presenting substance can be specified from a spectrum of the fluorescence which is emitted by the information-presenting substance when the thermoplastic resin is irradiated with an electromagnetic wave in a specific wavelength range, i.e., the wavelength and strength of the fluorescence.

### <Laser color former>

The transparent layer may further contain a laser color former. The resin composition containing the laser color former is suitably used, for example, as a material for a laser marking sheet (laser marking layer) which enables printing by means of marking treatment for cards requiring prevention of tampering particularly. As the laser color former, carbon black, antimony-doped tin oxide, a bismuth oxide-based color former or the like is used, and preferably, carbon black is used.

Thus, by further adding the laser color former to the transparent layer containing the information-presenting substance, a synergistic effect that printing by means of marking treatment can be particularly made clear can be expected.

The content of the laser color former is 0.0001 to 0.5% by mass, preferably 0.0005 to 0.3% by mass, and more preferably 0.001 to 0.1% by mass based on the mass of the whole transparent layer.

For example, when using carbon black as the laser color former, the content of carbon black is 1 to 100 mass ppm, and preferably 5 to 20 mass ppm based on the mass of the whole resin composition. Further, when using the above-described metal oxide-based laser color former, the content of the laser color former is, for example, 100 to 5000 mass ppm, preferably 300 to 3000 mass ppm, and more preferably 500 to 2000 mass ppm based on the mass of the whole resin composition.

### <Additives of resin composition>

The thermoplastic resin of the transparent layer may contain the below-described additives in addition to the above-described components. Specifically, they are at least one additive selected from the group consisting of a thermal stabilizer, an antioxidant, a flame retardant, a flame retardant auxiliary agent, an ultraviolet absorber, a mold release agent and a coloring agent, etc.

Moreover, an antistatic agent, a fluorescent brightener, an antifog additive, a flowability improving agent, a plasticizer, a dispersant, an antimicrobial agent, etc. may also be added as long as desired physical properties are not significantly impaired.

### [Non-transparent layer]

The non-transparent layer contains a thermoplastic resin as the main component like the transparent layer. Specifically, for example, 90% by mass or more, and preferably 95% by mass or more of the non-transparent layer is made of the thermoplastic resin.

As the thermoplastic resin which can substantially constitute the non-transparent layer as described above, a resin selected from a polycarbonate and a polyester, or a mixture of a plurality of resins is used.

Further, the non-transparent layer is colored with a pigment or the like, and for example, may further contain a white pigment. The non-transparent layer containing the white pigment is suitably used as a material for a white sheet, for example, a white sheet for forming a core layer including an antenna of an ID card or the like. As the white pigment, titanium oxide, talc, kaolin, clay, mica or the like is used, and titanium oxide is preferably used.

The content of the white pigment is 10 to 30% by mass, preferably 13 to 25% by mass, and more preferably 15 to 20% by mass based on the mass of the whole non-transparent layer.

The non-transparent layer may further contain the above-described components like the transparent layer.

Note that the "non-transparent layer (non-transparent film)" as used herein refers to a layer (film), wherein the transmittance obtained by measuring the total light transmittance of visible light in accordance with ISO-13468-1 is less than 50%. Further, when it is described that the layer and film are "non-transparent", it means that the transmittance obtained by measuring the total light transmittance of visible light in accordance with ISO-13468-1 is less than 50%.

### [Resin sheet for card]

As described above, the thermoplastic resin film laminate of the present invention has excellent security property and excellent function to protect the non-transparent layer because at least part of the surface of the non-transparent layer is covered with the transparent layer in which the predetermined information-presenting substance is homogeneously dispersed. For this reason, the thermoplastic resin film laminate of the present invention is suitably applied to a resin sheet for a card. Specifically, the laminate of the present invention is suitably used for the production of a resin sheet for a card which has an antenna chip-embedded sheet, a laser marking sheet or the like.

In the production process of the transparent layer and the non-transparent layer of the present invention, the resin composition is processed to form a layer shape (sheet shape). As a method for processing the resin composition to form a layer shape, a conventional technique can be employed. Examples thereof include methods using extrusion molding or cast molding.

For example, in a method using extrusion molding, the resin composition of the present invention in the form of pellet, flake or powder is melted and kneaded by an extruder and then extruded from a T-die or the like, and a sheet in a semi-melted state obtained is cooled and solidified while being compressed by rolls, thereby forming a sheet. Further, the laminate having the transparent layer and the non-transparent layer may be formed by co-extrusion molding.

Specific examples of the resin sheet for a card include an ID card 10 shown in Figure 1. The ID card 10 is a laminate comprising a first transparent layer 12, a second transparent layer 14, a first laser marking transparent layer 16, a second laser marking transparent layer 18, a first non-transparent layer 20 and a second non-transparent layer 22.

The first transparent layer 12, the second transparent layer 14, the first laser marking layer 16 and the second laser marking layer 18 are colorless and transparent, and respectively contain the information-presenting substance (not shown). The first laser marking transparent layer 16 and the second laser marking transparent layer 18 further contain the laser color former, and it is possible to provide printing thereto by means of irradiation of a laser light L.

The first non-transparent layer 20 and the second non-transparent layer 22 contain the white pigment and are white and non-transparent. The surface of the first non-transparent layer 20 on the first laser marking transparent layer 16 side, i.e., the surface covered with the first laser marking transparent layer 16 is a print surface to which printing is applied using an ink (not shown). In the first non-transparent layer 20, an antenna chip 24 is embedded. The information of an IC chip (not shown) is overwritten in response to an electromagnetic wave from outside received by the antenna chip 24.

Each of these layers can be formed, for example, with the thermoplastic resin mainly composed of the polycarbonate, or may be formed with a resin other than the polycarbonate such as the PETG resin. Further, by forming the first transparent layer 12 and the second transparent layer 14 with use of the polycarbonate resin, the ID card 10 whose surface is excellent in durability and heat resistance can be produced.

Further, by forming the first laser marking transparent layer 16 and the second laser marking transparent layer 18 with the polycarbonate resin or a resin mainly composed of preferably the polycarbonate resin, clear printing with black color is provided to an area irradiated with the laser light, and good contrast on the print surface can be obtained.

Note that by forming the first non-transparent layer 20 and the second non-transparent layer 22 with the polycarbonate resin or a resin mainly composed of preferably the polycarbonate resin, durability of the ID card 10 can be improved.

### EXAMPLES

Hereinafter, the present invention will be described in more detail by way of examples. However, the present invention is not limited to the below-described examples, and can be arbitrarily changed and then carried out without departing from the gist of the present invention.

### <Security property (authenticity determination)>

The film in which the information-presenting substance was contained in the transparent layer and it was confirmed that fluorescence was emitted when irradiated with an electromagnetic field having a specific wavelength was evaluated as "good", and the film in which the information-presenting substance was not contained and the security function cannot be exerted was evaluated as "poor". In the case of the film evaluated as "good", when employing an information-presenting substance presenting a manufacturer of a laminate, etc. in advance, authenticity determination can be carried out, and when employing an information-presenting substance presenting personal information of a card holder, etc., the security function can be exerted.

### <Print surface protection>

The film of a laminate comprising both a non-transparent layer on which a print surface is formed and a transparent layer which covers the print surface was evaluated as "good", and the film which does not satisfy these conditions was evaluated as "poor".

### <Blocking property>

A laminate comprising a non-transparent layer having a thickness of 500 µm or more was formed, and the total light transmittance (in accordance with ISO-13468-1) was measured using a Haze meter (HM-150 manufactured by Murakami Color Research Laboratory Co., Ltd.). When the measurement value was less than 5.0%, the blocking property was evaluated as "good", and when the value was 5% or more, it was evaluated as "poor".

### <Laser markability>

The laminate in which the laser color former was contained in the transparent layer was irradiated with a laser light. When the printed character was recognizable, the laser markability was evaluated as "present", and when the printed character was not recognizable, the laser markability was evaluated as "absent".

### <Production of film (laminate)>

Each of the films in Examples 1-3 and Comparative Examples 1-4 was produced as described below. Specifically, to the below-described polycarbonate resin, an information-presenting substance (lanthanoid-based compound) and a laser color former (carbon black, antimony-doped tin oxide-containing color former) were added in amounts respectively shown in Table 1, and the mixture was stirred, thereby obtaining a homogeneous thermoplastic resin.
Bisphenol A-type aromatic polycarbonate resin
("Iupilon (registered trademark) E-2000" manufactured by Mitsubishi Engineering-Plastics Corporation, thermal deformation temperature (glass transition temperature): 150°C)

Using the above-described thermoplastic resin, a transparent film (transparent layer) was produced as described below. Firstly, using a T-die melt extruder composed of a twin screw extruder with a barrel diameter of 32 mm and screw L/D=31.5, a sheet having a width of 300 mm was formed at a discharge rate of 20 kg/hour and at a screw rotation speed of 200 rpm. The cylinder/die head temperature was set at 280°C in Examples 1 and 2 and Comparative Examples 1-4, and at 240°C in Example 3. A film in which both the surfaces are a mirror surface was produced. The film was formed so that the thickness thereof became 100 µm.

Further, regarding the film (transparent layer) of Example 4, a transparent film (transparent layer) was produced in a manner similar to that in Examples 1-3 and Comparative Examples 1-4 except that the PETG resin was used instead of the above-described aromatic polycarbonate resin.

Further, the white pigment (titanium oxide) was added to the above-described polycarbonate resin or PETG resin in an amount of 15% by mass, and a non-transparent layer was formed in a manner similar to that for the transparent layer. Subsequently, the transparent film and the non-transparent film were layered, the obtained laminate was sandwiched between 100 µm SUS plates, and using a pneumatic heating press (IMC-1839 type: manufactured by Imoto Machinery Co., Ltd.), it was pressed at 200°C and an air pressure of 0.2 MPa for 60 seconds, thereby laminating the non-transparent layer with the transparent layer.

**[Table 1]**

| | Example 1 | Example 2 | Example 3 | Example 4 | Comparative Example 1 | Comparative Example 2 | Comparative Example 3 | Comparative Example 4 |
|---|---|---|---|---|---|---|---|---|
| Resin | Polycarbonate | Polycarbonate | Polycarbonate | PETG | Polycarbonate | Polycarbonate | Polycarbonate | Polycarbonate |
| Transparent layer | Present | Present | Present | Present | Present | Present | Absent | Present |
| Non-transparent layer | Present | Present | Present | Present | Present | Present | Present | Absent |
| Information-presenting substance | Present | Present | Present | Present | Absent | Absent | Absent | Present |
| Content of laser color former in transparent layer (laser layer) [mass ppm] | 10 | 2000 | 0 | 10 | 10 | 0 | 0 | 0 |
| Security property (authenticity determination) | Good | Good | Good | Good | Poor | Poor | Poor | Good |
| Print surface protection | Good | Good | Good | Good | Good | Good | Poor | Poor |
| Blocking property | Good | Good | Good | Good | Good | Good | Good | Poor |
| Laser markability | Present | Present | Absent | Present | Present | Absent | Absent | Absent |

It was confirmed that each of the films in Examples having the transparent layer containing the polycarbonate (PC) resin and a suitable amount of the information-presenting substance has excellent security property. Further, by further adding the laser color former to the transparent layer having excellent security property, a synergistic effect, in particular, that printing can be made clearer, can be expected. Moreover, by covering the print surface of the non-transparent layer with the transparent layer, it is possible to realize not only the security function, but also the reliable protection in a state where the print surface can be visually recognized from outside.

Meanwhile, in the case of the films of Comparative Examples 1-4, the security function and the print surface protective function were not successfully exerted thereby since the information-presenting substance was not contained in the transparent layer or the non-transparent layer was not provided though the information-presenting substance was contained in the transparent layer.

### EXPLANATIONS OF LETTERS OR NUMERALS

- 10: ID card (resin sheet for card)
- 12: first transparent layer
- 14: second transparent layer
- 16: first laser marking transparent layer
- 18: second laser marking transparent layer
- 20: first non-transparent layer
- 22: second non-transparent layer
- 24: antenna chip

## Claims

1. A thermoplastic resin film laminate, which comprises at least one transparent layer containing a thermoplastic resin and a non-transparent layer laminated with the transparent layer, wherein the transparent layer contains an information-presenting substance that emits fluorescence when irradiated with irradiation light in a specific wavelength range, and wherein the transparent layer is layered so as to cover at least part of the surface of the non-transparent layer.

2. The thermoplastic resin film laminate according to claim 1, wherein the thermoplastic resin contains a polycarbonate.

3. The thermoplastic resin film laminate according to claim 2, wherein the thermoplastic resin further contains a polyester.

4. The thermoplastic resin film laminate according to any one of claims 1 to 3, wherein printing is applied to at least one surface of the non-transparent layer, and wherein the transparent layer is layered on the surface of the non-transparent layer to which printing is applied.

5. The thermoplastic resin film laminate according to any one of claims 1 to 4, wherein the information-presenting substance contains an inorganic compound containing a lanthanoid element.

6. The thermoplastic resin film laminate according to any one of claims 1 to 5, wherein the transparent layer contains a laser color former in an amount of 0.001 to 0.5% by mass based on the mass of the whole transparent layer.

7. The thermoplastic resin film laminate according to any one of claims 1 to 6, wherein the transparent layer forms an outermost layer.

8. The thermoplastic resin film laminate according to any one of claims 1 to 7, wherein the non-transparent layer is colorless.

9. A thermoplastic resin film laminate, which comprises at least one transparent layer containing a thermoplastic resin and a non-transparent layer laminated with the transparent layer, wherein the transparent layer contains a laser color former and contains an information-presenting substance that emits fluorescence when irradiated with irradiation light in a specific wavelength range, and wherein the transparent layer is layered so as to cover at least part of the surface of the non-transparent layer.

10. A resin sheet for a card which comprises the thermoplastic resin film laminate according to any one of claims 1 to 9.
